# EUROPEAN PATENT SPECIFICATION

(11) **EP 3 267 151 B1**
(45) Date of publication and mention of the grant of the patent: **20.11.2024**
(21) Application number: 16002641.5
(22) Date of filing: 13.12.2016
(51) Int. Cl.: G01C 21/00, A01B 69/00

(54) **ROUTE SEARCH PROGRAM,ROUTE SEARCH SYSTEM, AND WORK VEHICLE INCORPORATED WITH ROUTE SEARCH SYSTEM**
ROUTENSUCHPROGRAMM, ROUTENSUCHSYSTEM UND ARBEITSFAHRZEUG MIT EINEM ROUTENSUCHSYSTEM
PROGRAMME DE RECHERCHE D'ITINÉRAIRE, SYSTÈME DE RECHERCHE D'ITINÉRAIRE ET VÉHICULE DE TRAVAIL INCORPORÉ AYANT UN SYSTÈME DE RECHERCHE D'ITINÉRAIRE

(30) Priority: 08.07.2016 JP 2016135848
(43) Date of publication of application: 10.01.2018
(73) Proprietor: Kubota Corporation, Osaka 556-8601 (JP)
(72) Inventor: Sakaguchi, Kazuo, Hyogo, 6618567 (JP); Uoya, Yasuhisa, Hyogo, 6618567 (JP); Morishita, Takafumi, Hyogo, 6618567 (JP); Yamaguchi, Kotaro, Hyogo, 6618567 (JP); Suga, Hiroki, Hyogo, 6618567 (JP); Suzugawa, Megumi, Hyogo, 6618567 (JP)
(74) Representative: Müller-Boré & Partner Patentanwälte PartG mbB

(56) References cited:
- EP-A2- 0 756 153
- US-A1- 2006 175 541
- US-A1- 2006 178 820
- US-A1- 2009 125 229
- US-A1- 2011 196 565

## Description

### [Technical Field]

The present invention relates to a technique of searching for a guidance travel route to be set for a work vehicle travelling in a work field, and a work vehicle adopting this technique.

### [Background Art]

JP 2016-021890 discloses a rice transplanter that generates a target route parallel to a teaching route generated by a teaching route generator, based on positional information measured by a GPS device to autonomously travel on the target route. When an operator operates an automatic turning device, this rice transplanter automatically turns toward a next target route, and, in succession to this, the rice transplanter autonomously travels on the next target route.

JP 2008-131880 discloses a rice transplanter configured to generate a target route parallel to a teaching route generated based on positional information measured by a GPS unit, to automatically turn toward a next target route, and to autonomously travel on the next target route.

US 2009/125229 A1 discloses a navigation system that computes an optimal route between an origin and a destination using a map server. The map server identifies likely points of deviation from the optimal route, and prior to transmitting map data to a client device, establishes alternative optimal routes from the deviations to the destination. A search algorithm is employed in which computation effort is reduced through improved heuristics and enhanced recognition of previously expanded nodes and alternative routes through nodes determined in prior iterations of the search. A route corridor map including the optimal route and alternative routes is download from the map server to the client device.

US 2006/175541 A1 and US 2006/178820 A1 disclose a system and method for precision guiding of agricultural vehicles along a series of adjacent paths to form rows for cultivating a field. In one aspect, the vehicle is moved along a first path while receiving positioning information from a navigational system (e.g., RTK GPS). This positioning information is stored in a processor and is used by the processor to compute a second path adjacent to said first path by calculating piecewise perpendicular offsets from the first path at multiple locations along the first path. The process is repeated to compute a third and subsequent paths so as to cover the field. Because of the offset process, the field may be covered with paths that have varying curvature along their length, while providing substantially no gaps or overlaps in the coverage of the field. In another aspect, the system may propose alternative paths and the user can intervene by steering the vehicle or using a graphical user interface to select among the alternative paths. A still further aspect allows for the recording of the paths that provide coverage of a field in the form of a template. This template can then be used to cause the vehicle to automatically steer along a previously calculated path in subsequent operations on the field, and in subsequent years.

EP 0 756 153 A2 discloses a vehicular navigation system for suggesting a route to a destination according to an already set route with the purpose of searching the optimal route in response to changes of traffic conditions near the present position of the vehicle. The system comprises a present position calculating means for calculating the present position of the vehicle, an information storage unit for storing suggested road data for suggesting the route, a traffic information acquiring means for acquiring traffic information, a route searching means for searching the optimal route from the present position to the destination based on a navigation program, the suggested road data, and the acquired traffic information, and an area setting means for setting a given range near the present position of the vehicle, whereby said route searching means selects and acquires traffic information corresponding to the suggested road data within the preset area among the suggested road data, and searches the route by converting the suggested road data based on the acquired traffic information.

US 2011/196565 A1 discloses a GNSS-based contour guidance path selection system for guiding a piece of equipment through an operation, such as navigating a guide path. The system includes a processor programmed for locking onto a particular aspect of the operation, such as deviating from a pre-planned or original guidance pattern and locking the guidance system onto a new route guide path, while ignoring other guidance paths. The system gives a vehicle operator control over a guidance route without the need to re-plan a pre-planned route. The device corrects conflicting signal issues arising when new swaths result in the guidance system receiving conflicting directions of guidance where the new swaths cross predefined swaths. An operator can either manually, or with an autosteer subsystem automatically, maintain a new contour guidance pattern, even while crossing predefined guidance paths that would otherwise divert the vehicle.

### [Summary of Invention]

### [Technical Problem]

A conventional work vehicle that travels along a set guidance travel route as described above might sometimes lose its travel route in the following situation. That is, a position and a direction of a vehicle body temporarily deviate from the travel route when the work vehicle makes a turn from the guidance travel route toward a next travel route or travels on a muddy or rough ground. In searching for a travel route that should newly be targeted, from among a plurality of set travel routes that should be searched, another travel route adjacent to a travel route that should be targeted, or a travel route in another search area might be retrieved in some cases, instead of the travel route that should be targeted. Being notified with steering information instructing a driver to travel toward such a wrong travel route, or automatically steering the work vehicle toward a wrong travel route might lead to an unintentional result.

In view of the above circumstances, there has been demanded a technique of searching for a travel route that should be targeted, with higher reliability.

### [Solutions to Problem]

The above-stated problem is solved by the features disclosed by the independent claims. Further exemplary embodiments are defined by the dependent claims.

The present disclosure provides a route search program for finding a guidance travel route to be targeted by a work vehicle, the route search program causing a computer to achieve a search area setting function of setting, as a search area, a fan shaped area spreading in a travel direction from an own vehicle reference point which is a predetermined reference point of the work vehicle, and a guidance route selection function of selecting, as a guidance travel route to be targeted by the work vehicle, a travel route candidate determined as closest to the own vehicle reference point in the search area, based on an obtained own position, from among a plurality of travel route candidates read from a travel route storing unit storing a plurality of travel routes.

According to this configuration, a plurality of travel routes set to allow a work vehicle to travel in a work field is read from the travel route storing unit, and is developed as travel route candidates in a memory or the like. One of the travel route candidates, which is closest to an own vehicle reference point of the work vehicle (typically calculated from positioning data) in a forward travel direction of the work vehicle, is selected as a guidance travel route, from among the travel route candidates in a set search area. In a fan shaped area spreading in a forward travel direction of the work vehicle, a travel route candidate which is closest to an own vehicle reference point of the work vehicle is highly likely to be a travel route that should be travelled. Even though a plurality of travel route candidates presents, a guidance travel route that should be travelled can therefore be easily and promptly selected by the above described method. A specific example of a fan shaped area spreading in a travel direction from an own vehicle reference point is a fan shaped area having a central angle of 180° or smaller around the own vehicle reference point (+90° and -90° around a center line of the travel direction), and advantageously a central angle in a range from 45° to 90° inclusive. However, a desirably settable configuration is advantageous.

To construct the above described route search program for a work vehicle, it is advantageous to form a system using the route search program and to incorporate the system into the work vehicle as a control system of the work vehicle. The present disclosure also provides a work vehicle equipped with such a route search system. The work vehicle can produce functional effects identical to the functional effects of the above described route search program.

The present disclosure also provides a route search program for finding a guidance travel route to be targeted by a work vehicle, the route search program causing a computer to achieve a search area setting function of setting, as a search area, an area around an own vehicle reference point which is a predetermined reference point of the work vehicle, a positional relationship calculation function of calculating positional relationships among a plurality of travel route candidates read from a travel route storing unit storing a plurality of travel routes, an own position of the work vehicle, the own position being calculated based on positioning data sent from a positioning module, and the search area, and a guidance route selection function of selecting a guidance travel route to be targeted by the work vehicle, based on the positional relationships, from among the travel route candidates.

According to this configuration, a plurality of travel routes set to allow a work vehicle to travel in a work field is read from the travel route storing unit, and is developed in a memory or the like. Positional relationships among these travel routes, an own position of the work vehicle, the search area, and the travel route candidates are calculated. Based on these positional relationships, a travel route that is currently more appropriate to a travel target is selected as a guidance travel route. A guidance travel route to actually be targeted by the work vehicle is selected from a plurality of travel route candidates. Therefore, even if the work vehicle approaches a travel route (one of the travel route candidates) along which the work vehicle should not primarily travel, due to a positional difference of the work vehicle or other reasons, an evaluation is conducted based on positional relationships among the travel route candidates, an own position, and a search area, a travel route along which the work vehicle should primarily travel is advantageously and highly likely to be selected as a guidance travel route.

Since the work vehicle normally performs work while travelling forward, a travel route appropriate as a guidance travel route is a one that lies in a travel direction of the work vehicle (a travel route along which the work vehicle should be guided currently). Since the work vehicle is however frequently turned 90° or 180° or is steered to avoid an obstruction, an angle in a travel direction of the work vehicle relative to a travel route might substantially fall within a range of ±90° around 0° (the travel route and the travel direction are in a parallel relationship). This means that a search area should cover an area in front of the own vehicle in a travel direction, i.e., a front area. However, the more an angle deviates in a horizontal direction from a center of the travel direction, the less a possibility of presence of a guidance travel route. To solve this problem, according to an advantageous exemplary embodiment of the present invention, the search area has a fan shape spreading in a travel direction of the own vehicle from the own vehicle reference point serving as a center point. A specific example of a fan shaped area spreading in a travel direction from an own vehicle reference point in here is also a fan shaped area having a central angle of 180° or smaller around the own vehicle reference point, and advantageously a central angle in a range from 45° to 90° inclusive. However, a desirably settable configuration is advantageous. Adopting a search area having such a shape leads to a prompt, effective process of selecting a guidance travel route.

There are various positional relationships to be calculated among travel route candidates, an own position, and a search area. A more effective positional relationship needs to be adopted for precisely selecting a guidance travel route. To allow the work vehicle to travel while a center of the work vehicle lies on a travel route, positional relationships between an own vehicle reference point (for example, a center point of an own vehicle, and a center point on a front edge of an own vehicle) and travel route candidates are particularly important. When the work vehicle deviates from a travel route, positional relationships between a search area that is an area around an own vehicle reference point and travel route candidates are also important. To this end, according to another advantageous exemplary embodiment of the present invention, the positional relationship calculation function includes a function of calculating, as the positional relationships, the positional relationships between the own vehicle reference point and the travel route candidates and the positional relationships between the search area and the travel route candidates.

A normal travel route in the work field is a line having end points on both sides. A travel route should as required be defined as a line that is not limited with end points when taking into account some cases where the work vehicle deviates from a travel route. To this end, according to still another aspect of the present disclosure, the travel route is defined to include an actual travel route portion functioning as an actual travel route, and an extended route portion which is a line extended from the actual travel route portion, and the positional relationship calculation function includes a function of calculating a coordinate value of a shortest position, from the own vehicle reference point, on the actual travel route portion or the extended route portion, and a function of determining whether the shortest position is present in the search area. With these features, a guidance travel route can appropriately be selected even if the work vehicle deviates from an actual travel route portion, i.e., a practical travel route.

More specifically, when a travel route candidate calculated with a positional relationship indicating that the shortest position lies on the actual travel route portion is present, the travel route candidate may advantageously be selected as a guidance travel route. With this selection, a process of selecting a guidance travel route can promptly be finished provided that the work vehicle correctively travels on a guidance travel route, thus process efficiency can be enhanced.

When a travel route candidate calculated with a positional relationship indicating that the shortest position lies on the extended route portion and the shortest position is within the search area is present, the travel route candidate may advantageously be selected as a guidance travel route. Since, even if the work vehicle deviates from an actual travel route portion of a guidance travel route, the work vehicle can reach the actual travel route portion provided that the work vehicle keeps travelling with that state, selecting the travel route candidate as a guidance travel route at this point is effective.

To construct the above described route search program for a work vehicle, it is advantageous to form a system using the route search program and to incorporate the system into the work vehicle as a control system of the work vehicle. The present disclosure also provides such a route search system. More specifically, the present disclosure provides a route search system for finding a guidance travel route to be targeted by a work vehicle, the route search system including a search area setting unit that sets, as a search area, an area around an own vehicle reference point which is a predetermined reference point of the work vehicle, a positional relationship calculation unit that calculates positional relationships among a plurality of travel route candidates read from a travel route storing unit storing a plurality of travel routes, an own position of the work vehicle, the own position being calculated based on positioning data sent from a positioning module, and the search area, a guidance route selection unit that selects the guidance travel route, based on the positional relationships, from among the travel route candidates, and a deviation calculation unit that calculates a deviation between the guidance travel route and the own position. The route search system can produce functional effects identical to the functional effects of the above described route search program, and can adopt the above described various exemplary embodiments.

The present disclosure also provides a work vehicle incorporated with this route search program or route search system. More specifically, the present disclosure provides a work vehicle including a travel route storing unit that stores a plurality of travel routes, an own position calculation unit that calculates an own position, based on positioning data sent from a positioning module, a search area setting unit that sets, as a search area, an area around an own vehicle reference point, a positional relationship calculation unit that calculates positional relationships among a plurality of travel route candidates read from the travel route storing unit, the own position, and the search area, a guidance route selection unit that selects a guidance travel route for guiding an own vehicle, based on the positional relationships, from among the travel route candidates, and a deviation calculation unit that calculates a deviation between the guidance travel route and the own position. The work vehicle can produce functional effects identical to the functional effects of the above described route search program, and can adopt the above described various advantageous exemplary embodiments.

A work vehicle can be steered and travelled either manually or automatically in a work field along a guidance travel route. A work vehicle to be steered automatically includes an automatic travel control unit that automatically steers the own vehicle based on the deviation so that the own vehicle travels along the guidance travel route. A work vehicle to be steered manually includes a notification unit that provides a notification of steering guidance information based on the deviation so that the own vehicle travels along the guidance travel route.

### [Brief Description of Drawings]

Fig. 1 is an explanatory view illustrating a search area set around a work vehicle, and travel routes set in a work field.
Fig. 2 is an explanatory view of examples each illustrating a control rule for selecting a guidance travel route based on positional relationships among a group of travel route candidates, an own position, and a search area.
Fig. 3 is a side view of a tractor equipped with a tilling machine, according to a specific exemplary embodiment of the work vehicle.
Fig. 4 is a functional block diagram illustrating a control system of the tractor.
Fig. 5 is a flowchart illustrating a route search routine.
Fig. 6 is a schematic view of examples each illustrating positional relationships among a group of travel route candidates, an own position, and a search area.
Fig. 7 is a schematic view of examples each illustrating positional relationships among a group of travel route candidates, an own position, and a search area.
Fig. 8 is a schematic view of examples each illustrating positional relationships among a group of travel route candidates, an own position, and a search area.

### [Description of Embodiments]

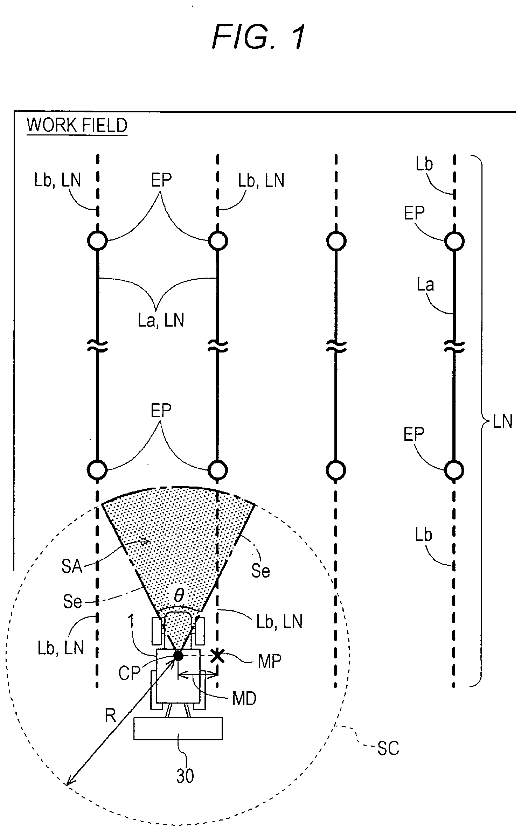

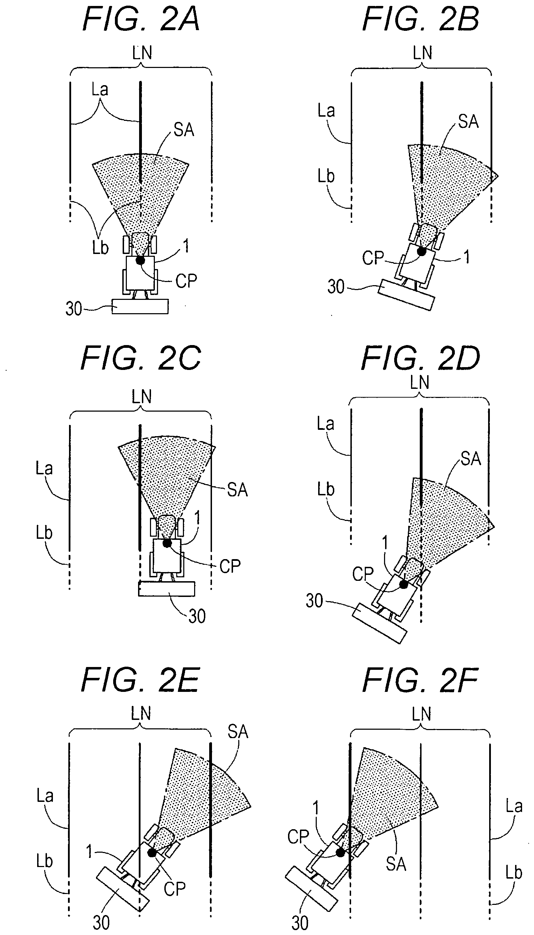

Prior to describing a specific exemplary embodiment of the present invention, definitions of terms used in the present invention and principles of a route search will now be described herein with reference to Figs. 1 and 2. Fig. 1 schematically illustrates a work vehicle including a vehicle body 1 and a work device 30 mounted on the vehicle body 1, and a work field in which this work vehicle travels. Guidance travel routes LN that are set in the work field and are to be targeted by the work vehicle are illustrated in here as a group of straight travel routes extending in parallel each other. Each of the travel routes LN are expressed with an equation. The travel routes LN each include an actual travel route portion La functioning as an actual travel route, and extended route portions Lb extended from the actual travel route portion La. The actual travel route portion La is defined by end points EP at both ends. Each of the travel routes LN constituting the group of travel routes is not limited to a straight line in a strict sense, but may be a curve. The curves at that time may be curves expressed by curve equations, or may be aggregations of pieces of straight lines joined together while being bent. The travel routes LN may not be disposed in parallel each other, but may be disposed in a nonparallel manner, for example, some travel routes LN are disposed to intersect with other travel routes LN. A work vehicle sometimes travels while working (hereinafter referred to as actual work travelling), and sometimes travels without working where no directional change is included (hereinafter referred to as no work travelling). In this specification, however, a term such as "when a work vehicle travels" refers to either or both meanings, i.e., actual work travelling and/or no work travelling.

Although an own vehicle reference point CP is set, as a predetermined reference point of the work vehicle, at almost a center position of the vehicle body 1, the own vehicle reference point CP can be set at various positions such as a ground work position of the work device 30. A distance in a radial direction from the own vehicle reference point CP is referred to as a search distance R. That is, an area inside a circle SC having a radius R around the own vehicle reference point CP satisfies an area within the search distance R. In the example shown in Fig. 1, an area around an own vehicle reference point CP, i.e., a fan like area (fan shaped area) having a central angle of approximately 45° and spreading in a travel direction of an own vehicle around the own vehicle reference point CP, is further set as a search area SA. This fan shape has a radius that matches with the search distance R, and its sides are denoted with reference sign Se. A central angle θ of the fan shape may be expanded to 180°. Any desired shape may be applied to the search area SA. However, the shape may advantageously be as simple as possible in terms of computation. Even if an own position calculated based on positioning data sent from a satellite positioning module such as a GPS or a GNNS (an example positioning module) and a position of an own vehicle reference point CP differ, the positions can be corrected with a simple computation. Thus, the positions can be regarded substantially as identical. To provide a simple description, an own position and an own vehicle reference point CP are described as identical herein. An own vehicle reference point CP is therefore sometimes referred to simply as an own position. Since a perpendicular line from an own vehicle reference point CP (own position) toward a travel route LN defines a shortest distance MD between the own vehicle reference point CP and the travel route LN, a coordinate position indicating a node between this perpendicular line and the travel route LN is defined as a shortest position MP.

A group of travel routes set in a work field, i.e., a group of straight lines developed in a memory in terms of computation, becomes a plurality of travel route candidates to be handled by this route search program. A positional relationship between an own vehicle reference point CP and a search area SA is calculated, and a guidance travel route to be targeted by the work vehicle is selected from among the plurality of travel route candidates, based on the calculated positional relationship.

Fig. 2 shows, in each example, travel route candidates configured by three travel routes LN, and a work vehicle in various positions (orientations) relative to the travel route candidates. The work vehicle is added with an own vehicle reference point CP indicated with a black dot, and a fan shaped search area SA. The travel routes LN linearly extend in parallel each other from the top to bottom of the view, and are each indicated with an actual travel route portion La on an upper side and an extended route portion Lb on a lower side. Ones of the travel routes LN shown with bold lines are adopted as guidance travel routes.

In a basic route search method according to the present invention, a travel route candidate that is closest to an own position (own vehicle reference point) CP in a search area SA is selected as a guidance travel route to be targeted by the work vehicle. In search areas SA shown in Fig. 2, ones of the travel routes LN, which substantially lie closest to the own vehicle reference points CP are also adopted as guidance travel routes.

Fig. 2 shows examples of rules, i.e., Examples (a) to (f), used as other basic route search methods according to the present invention, for selecting a guidance travel route from among three travel route candidates based on positional relationships among travel route candidates, an own vehicle reference point CP of the work vehicle, and a search area SA.

### Example (a)

A travel direction of the work vehicle matches with an extending direction of travel routes LN. A search area SA captures an actual travel route portion La of a travel route candidate at a center. An own vehicle reference point CP lies on an extended route portion Lb of the travel route candidate at the center. When the work vehicle keeps advancing, the work vehicle reaches the actual travel route portion La. Thus, the travel route candidate at the center is selected as a guidance travel route.

### Example (b)

A travel direction of the work vehicle is slightly inclined toward an extending direction of travel routes LN. A search area SA captures an actual travel route portion La of a travel route candidate at a center and an actual travel route portion La of a travel route candidate on a right. An own vehicle reference point CP lies on an extended route portion Lb of the travel route candidate at the center. When the work vehicle advances along the travel route candidate at the center with a steering wheel slightly steered, the work vehicle reaches the actual travel route portion La. Thus, the travel route candidate at the center is selected as a guidance travel route..

### Example (c)

Although a travel direction of the work vehicle matches with an extending direction of travel routes LN, the work vehicle lies between a travel route candidate at a center and a travel route candidate on a right. A search area SA captures an actual travel route portion La of the travel route candidate at the center and an actual travel route portion La of the travel route candidate on the right. Whichever of the travel route candidates, a shortest position MP lies on the actual travel route portion La. Since a shortest distance MD is a distance between the work vehicle and the travel route candidate at the center, the travel route candidate at the center is selected as a guidance travel route.

### Example (d)

A travel direction of the work vehicle is largely inclined in an extending direction of travel routes LN. A search area SA captures an actual travel route portion La of a travel route candidate at a center and an extended route portion Lb of a travel route candidate on a right. Whichever of the travel route candidates, a shortest position MP lies on either an extended route portion Lb of the travel route candidate at the center or the extended route portion Lb of the travel route candidate on the right. For a shortest distance MD, a distance between the work vehicle and the travel route candidate at the center is shorter. A node between the search area SA and the travel route candidate at the center lies on an actual travel route portion La of the travel route candidate at the center, while a node between the search area SA and the travel route candidate on the right lies on an extended route portion Lb of the travel route candidate on the right. The travel route candidate at the center is selected as a guidance travel route.

### Example (e)

A travel direction of the work vehicle is largely inclined in an extending direction of travel routes LN. A search area SA captures an actual travel route portion La of a travel route candidate on a right. Whichever of travel route candidates, a shortest position MP lies on the actual travel route portion La of the travel route candidate on the right, or either actual travel route portions La of other travel route candidates. For a shortest distance MD, a distance between the work vehicle and the travel route candidate at a center is shorter. An own vehicle reference point CP of the work vehicle passes through the travel route candidate at the center. A node between the search area SA and the travel route candidate on the right lies on an actual travel route portion La of the travel route candidate on the right. The travel route candidate on the right is selected as a guidance travel route.

### Example (f)

A travel direction of the work vehicle is largely inclined in an extending direction of travel routes LN. A search area SA captures an actual travel route portion La of a travel route candidate on a left and an actual travel route portion La of a travel route candidate at a center. Whichever of the travel route candidates, a shortest position MP lies on either the actual travel route portions La of the travel route candidates at the center and on the left. For a shortest distance MD, a distance between the work vehicle and the travel route candidate on the left is shorter. A node between the search area SA and the travel route candidate on the left and a node between the search area SA and the travel route candidate at the center lie on the respective actual travel route portions La. The travel route candidate on the left is selected as a guidance travel route.

By combining the above described rules, a selection algorithm for selecting a guidance travel route from among a plurality of travel route candidates based on positional relationships among the travel route candidates, an own vehicle reference point CP of the work vehicle, and a search area SA can be constructed in accordance with a type of the work vehicle or a type of a work field.

Once a guidance travel route is selected, a deviation between the guidance travel route and an own position is then calculated to steer the work vehicle so as to reduce this deviation. Thus the work vehicle travels as planned. The work vehicle may be steered manually or automatically. Since, when the work vehicle is steered manually, a calculated deviation is notified visually or audibly to a driver, the driver can steer the work vehicle by referring to the notification.

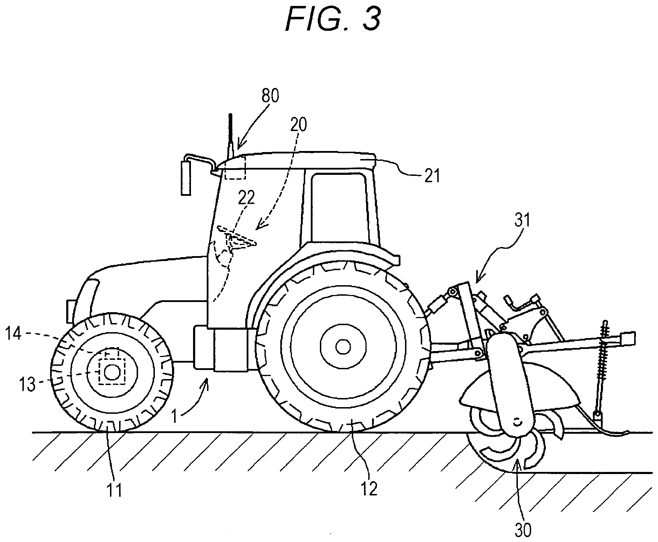

Next, the specific exemplary embodiment of a work vehicle according to the present invention will now be described herein. In this exemplary embodiment, as shown in Fig. 3, the work vehicle is a tractor that can be equipped with the work device 30, and that travels and works in a field (work field) separated by ridges as boundaries. This tractor is provided with an operation unit 20 at a center of the vehicle body 1 supported by front wheels 11 and rear wheels 12. At a rear of the vehicle body 1, the work device 30 that is a rotary tilling machine is mounted via a hydraulic lifting mechanism 31. The front wheels 11 function as steering control wheels through which the tractor changes a travel direction when a steering angle of the steering control wheels is changed. The steering angle of the front wheels 11 is changed by an operation of a steering mechanism 13. The steering mechanism 13 includes a steering motor 14 for automatic steering. For manual travelling, the front wheels 11 can be steered by operating a steering wheel 22 disposed on the operation unit 20. In a cabin 21 of the tractor, a satellite positioning module 80 configured as a GNSS module is provided. As a component of the satellite positioning module 80, a satellite antenna for receiving GPS signals and GNSS signals is attached at a ceiling area of the cabin 21. The satellite positioning module 80 may include an inertial navigation module incorporated with a gyro acceleration sensor and a magnetic director sensor for complementing satellite navigation. The inertial navigation module may also be provided in a different location from the satellite positioning module 80.

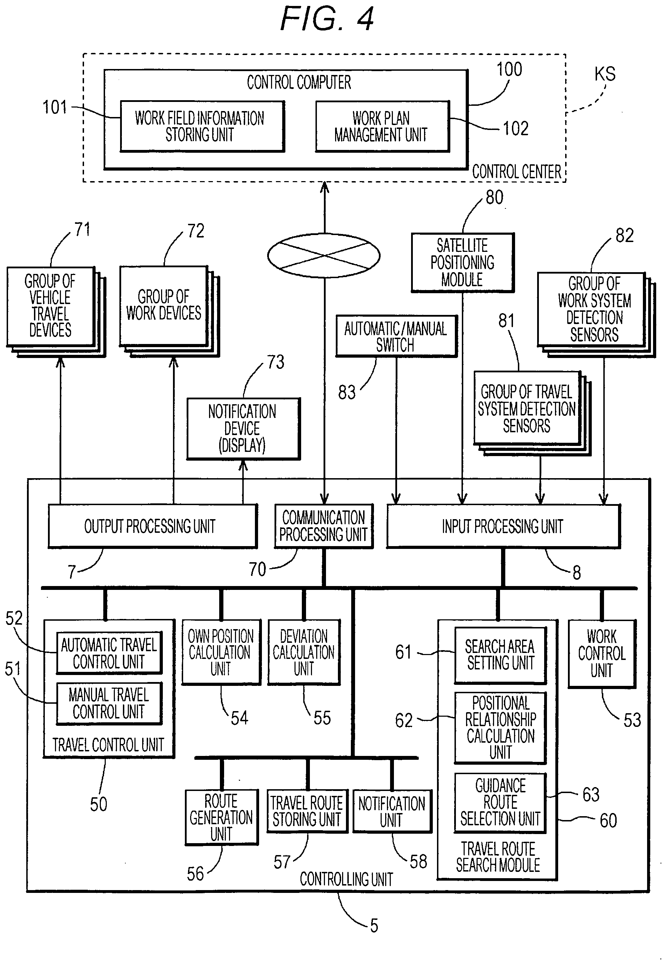

Fig. 4 illustrates a control system constructed in this tractor. This control system is configured to achieve the route search technique according to the present invention described with reference to Figs. 1 and 2. The controlling unit 5 that is a core element of this control system includes an output processing unit 7 and an input processing unit 8, which respectively function as input and output interfaces, and a communication processing unit 70. The output processing unit 7 is connected with, for example, a group of vehicle travel devices 71, a group of work devices 72, and a notification device 73. The group of vehicle travel devices 71 includes the steering motor 14 and, although not shown in the drawings, devices to be controlled for allowing the work vehicle to travel, such as a transmission mechanism and an engine unit. The group of work devices 72 includes, for example, a drive mechanism for the work device 30, and a lifting mechanism 31 for raising and lowering the work device 30. The communication processing unit 70 has a function of sending data processed by the controlling unit 5 to a management computer 100 constructed in a control center KS in a remote location, and of receiving various kinds of data from the management computer 100. The notification device 73 includes a display, lamps, and a speaker. The display in particular shows travel routes generated by the controlling unit 5. The lamps and the speaker are used to notify a driver and an operator of various desired kinds of information such as travel precautions and a degree of deviation from a target travel route when the work vehicle is automatically steered. Signals are transmitted between the notification device 73 and the output processing unit 7 in a wired or wireless manner.

The input processing unit 8 is coupled to, for example, the satellite positioning module 80, a group of travel system detection sensors 81, a group of work system detection sensors 82, and an automatic/manual switch 83. The group of travel system detection sensors 81 includes sensors for detecting travel states such as an engine speed and a transmission state. The group of work system detection sensors 82 includes, for example, sensors for detecting a position and an inclination of the work device 30, and sensors for detecting workloads and the like. The automatic/manual switch 83 is a switch for selecting either an automatic travel mode for travelling with automatic steering or a manual travel mode for travelling with manual steering. For example, by operating the automatic/manual switch 83, the mode of the work vehicle travelled in the automatic travel (automatic steering) mode can be switched to the manual travel (manual steering) mode. On the other hand, by operating the automatic/manual switch 83, the mode of the work vehicle travelled in the manual travel (manual steering) mode can be switched to the automatic travel (automatic steering) mode.

In the controlling unit 5, a travel route search module 60 for executing a route search to find a guidance travel route to be targeted by the work vehicle is constructed as described with reference to Figs. 1 and 2. The controlling unit 5 also includes a travel control unit 50, a work control unit 53, an own position calculation unit 54, a deviation calculation unit 55, a route generation unit 56, a travel route storing unit 57, and a notification unit 58.

Since the automatic travel (automatic steering) mode and the manual travel (manual steering) mode are both configured to be available in this tractor for travelling, the travel control unit 50 for controlling the group of vehicle travel devices 71 includes a manual travel control unit 51 and an automatic travel control unit 52. In accordance with operations by the driver, the manual travel control unit 51 controls the group of vehicle travel devices 71. The automatic travel control unit 52 generates an automatic steering instruction and outputs the automatic steering instruction to the steering motor 14 via the output processing unit 7 so as to cause the vehicle body 1 to travel along the guidance travel route selected by the travel route search module 60. To control movement of the work device 30, the work control unit 53 provides control signals to the group of work devices 72.

Based on the positioning data sent from the satellite positioning module 80, the own position calculation unit 54 calculates an own position. The deviation calculation unit 55 calculates a deviation between a guidance travel route selected by the travel route search module 60 and an own position (including a difference in coordinate position and a difference in direction), and provides the calculated deviation to the automatic travel control unit 52. The automatic travel control unit 52 generates an automatic steering instruction to control the steering motor 14 via the output processing unit 7 so as to reduce this deviation.

The route generation unit 56 generates route data specifying a travel route to be handled as a travel route candidate by the travel route search module 60. This route data is generated based on external shape data obtained from work field map data included in work field information. The route data can also be generated through an entry made by a driver or a manager. The work field information can be extracted from a work field information storing unit 101 of the management computer 100 installed in the control center KS in the remote location, and can be downloaded into the controlling unit 5. The route data itself can also be controlled by the management computer 100 so as to be included in the work field information. That is, although the route generation unit 56 is constructed in the controlling unit 5 in Fig. 4, the route generation unit 56 may be constructed in the management computer 100 so that route data generated by the management computer 100 is downloaded into the controlling unit 5 via the communication processing unit 70. Although not shown in Fig. 4, the route generation unit 56 may also be constructed in a communication terminal such as a tablet computer held by, for example, a supervisor supervising this tractor being operated so that route data generated by the communication terminal is downloaded into the controlling unit 5 via the communication processing unit 70. In either case, a travel route that is route data obtained by the controlling unit 5 is stored in the travel route storing unit 57. A work plan describing travelling work in a specified field may also be downloaded from a work plan management unit 102 of the management computer 100 into the controlling unit 5. The work vehicle is thus adjusted beforehand so as to operate based on the work plan.

The notification unit 58 generates a notification signal (display data or voice data) for notifying the driver and the supervisor of necessary information through the notification device 73 including the display and the speaker. In this exemplary embodiment, the notification unit 58 has a display data generation function of generating data for graphically showing on the display a work route stored in the travel route storing unit 57 and a deviation calculated by the deviation calculation unit 55.

The travel route search module 60 is substantially constructed with a computer program, and can execute controls described with reference to Figs. 1 and 2. To this end, the travel route search module 60 includes a search area setting unit 61, a positional relationship calculation unit 62, and a guidance route selection unit 63. The search area setting unit 61 sets a shape of the search area SA shown in Fig. 1, and a position of the search area SA relative to the vehicle body 1. Since the search area SA has a fan shape in this exemplary embodiment, the central angle θ of the fan shape, and a side length Se of the fan shape are set. A center point of this fan shape is regarded as an own vehicle reference point CP, and is handled as an own position. The side length Se of the fan shape and a search distance R are identical. The positional relationship calculation unit 62 calculates positional relationships between a plurality of travel route candidates read from the travel route storing unit 57 and an own position obtained by the own position calculation unit 54. The guidance route selection unit 63 selects, from among the travel route candidates, a guidance travel route for guiding an own vehicle, based on the positional relationships calculated by the positional relationship calculation unit 62, and provides the guidance travel route to the deviation calculation unit 55.

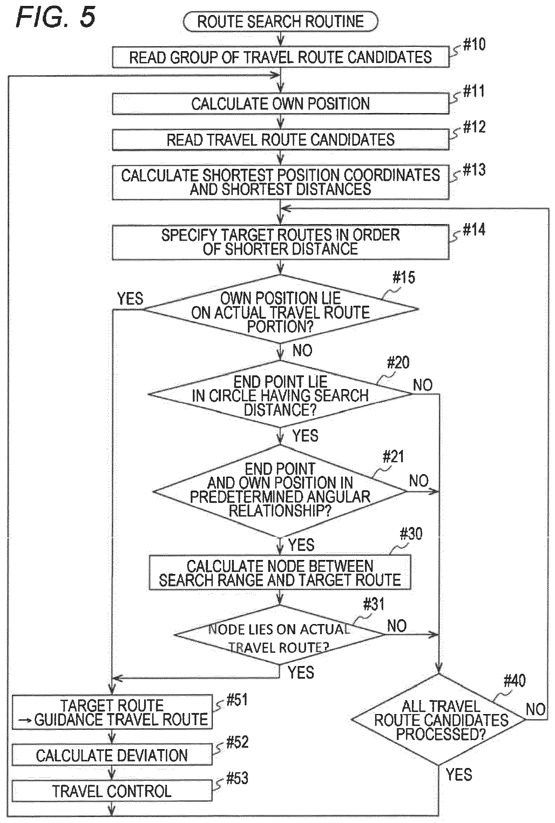

The guidance route selection unit 63 can combine and execute the control rules such as Examples (a) to (f) described with reference to Fig. 2. A route search routine to be executed by the guidance route selection unit 63 by combining these control rules will be described herein with reference to the flowchart shown in Fig. 5.

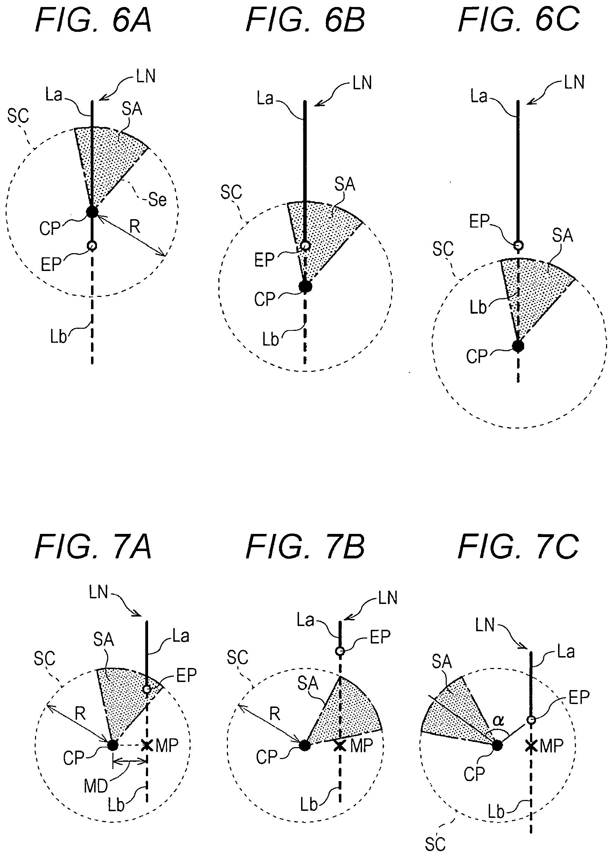

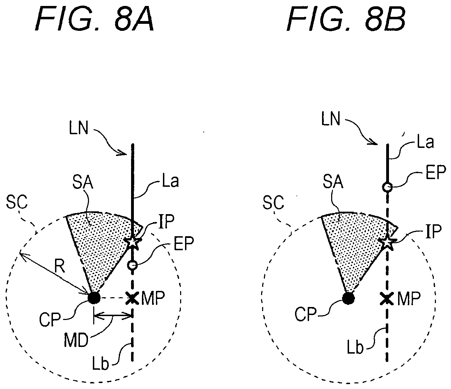

To help understanding of the flowchart, positional relationships among own positions, search areas SA, and travel routes are schematically illustrated in Figs. 6 to 8. These positional relationships are used as selection conditions in selecting a guidance route. In Fig. 6, each own vehicle reference point (own position) CP lies on a travel route LN. In (a) of Fig. 6, the own vehicle reference point CP lies on an actual travel route portion La. In (b) and (c) of Fig. 6, the own vehicle reference points CP respectively lie on an extended route portion Lb. In (b) of Fig. 6, an end point EP is within a search area SA. In (c) of Fig. 6, an end point EP is outside a search area SA. In Fig. 7, each own vehicle reference point (own position) CP lies away from a travel route LN, where shortest distances MD and shortest positions MP are shown. In (a) of Fig. 7, an end point EP corresponding to the shortest position MP lies within a search area SA. In (b) of Fig. 7, an end point EP lies outside a search distance R. In (c) of Fig. 7, an angle α between a straight line joining the own vehicle reference point CP and an end point EP and a travel direction of the vehicle body 1 exceeds a predetermined angle of 90°. Fig. 8 shows sides Se of search areas SA and nodes IP of travel routes (star marks in Fig. 8). In (a) of Fig. 8, the node IP lies on an actual travel route portion La. In (b) of Fig. 8, the node IP lies on an extended route portion Lb.

When a route search routine is called, travel route data is read as a group of travel route candidates from the travel route storing unit 57 (#10). Next, an own position calculated by the own position calculation unit 54 is obtained (#11). A plurality of travel routes is extracted and read as travel route candidates from the travel route storing unit 57 (#12). All travel routes to be developed in an entire area or a partial area of a work field may be read as travel route candidates. This process step in this case is handled as an initial process. Travel routes may otherwise be added with attribute values on un-finished and finished operations and travel directions, and the routine may be configured so that travel routes that are not subject to selection will not be extracted.

Next, perpendicular lines passing through the own position toward travel route candidates are obtained, and then shortest positions MP (coordinate value) and shortest distances MD are obtained (#13). In an order of shorter distances, the shortest distances MD are specified as target travel route candidates (hereinafter simply referred to as target routes) for later processes of calculating positional relationships (#14). As a first step of selecting a route, a determination is made as to whether the own position (own vehicle reference point CP) lies on a target route (#15). This determination condition obviously includes a predetermined error range, and the own position may not exactly lie on a target route. Even when the own position lies, instead of an actual travel route portion La of a target route, on an extended route portion Lb at that time, this target route is deemed to satisfy this determination condition (Yes in #15), and is selected as a guidance travel route (#51). A positional difference (same as a shortest distance MD) and a difference in direction are calculated by the deviation calculation unit 55 as a deviation between a selected guidance travel route and the own position (#52), and the calculated deviation is used for travel control by the travel control unit 50 (#53). The routine returns to Step #11 for a route search with a new own position.

If the own position (own vehicle reference point CP) does not lie on a target route in Step #15 (No in #15), a search area determination is then made as to whether an end point EP of an actual travel route portion of the target route is within a circle area of a search distance R (#20). If this search area determination is not satisfied (No in #20), a determination is made as to whether all travel route candidates have been searched (#40). As long as an unprocessed target route remains (No in #40), the routine returns to Step #14 for a selection process for a next target route. On the other hand, when all target routes have been processed (Yes in #40), the routine returns to Step #11 for a route search with a new own position. When this search area determination is satisfied (Yes in #20), a next angle determination is made (#21). This angle determination is made as to whether an angle between a straight line joining an end point EP and an own position and a travel direction of the vehicle body 1 falls within a predetermined range, or whether a search area SA includes an end point EP.

If this angle determination is not satisfied (No in #21), as long as an unprocessed target route remains (No in #40), the routine returns to Step #14 for a selection process for a next target route. On the other hand, when all target routes have been processed (Yes in #40), the routine returns to Step #11 for a route search with a new own position. When the angle determination is satisfied (Yes in #21), a node between a side Se of a search area SA and a target route is further calculated (#30), and a node determination is made as to whether the node lies on an actual travel route portion of the target route (#31). If this node determination is not satisfied (No in #31), as long as an unprocessed target route remains (No in #40), the routine returns to Step #14 for a selection process for a next target route. On the other hand, when all target routes have been processed (Yes in #40), the routine returns to Step #11 for a route search with a new own position. When the node determination is satisfied (Yes in #31), this target route is selected as a guidance travel route (#51). A positional difference (same as a shortest distance MD) and a difference in direction are calculated by the deviation calculation unit 55 as a deviation between a selected guidance travel route and the own position (#52), and the calculated deviation is used for a travel control performed by the travel control unit 50 (#53). The routine returns to Step #11 for a route search with a new own position.

### [Other Exemplary Embodiments]

(1) In the above described exemplary embodiment, a guidance travel route is selected based on positional relationships among an own position (own vehicle reference point CP), a search area SA, and travel route candidates (travel routes LN). However, in a simplest exemplary embodiment, a travel route candidate that is closest to an own position (own vehicle reference point) is selected as a guidance travel route.
(2) Although travel routes LN are straight lines in the above described exemplary embodiment, the travel routes LN may be curves.
(3) Although the central angle of the fan shaped search area SA is approximately 45° in the above described exemplary embodiment, a desired central angle may be set and is advantageously 180° or smaller. A search area SA having a central angle of 0° is practically handled as a straight line. Although an advantageous center point of a search area SA lies at a center of a vehicle body 1 in a width direction, and lies on a front side of the vehicle body in a travel direction, a desired center point can be set in accordance with specifications and the like of a work vehicle.
(4) The above described exemplary embodiment describes, as the work vehicle, a tractor equipped with a rotary tilling machine as the work device 30. However, in addition to such a tractor, agricultural work vehicles such as rice transplanters and combines may be adopted as exemplary embodiments.
(5) Each function unit in the functional block diagram shown in Fig. 4 is separated for description purposes. In an actual case, each function unit can be integrated with other function units, or divided into a plurality of sub-function units. Instead of the management computer 100 installed in the control center KS in the remote location, a communication terminal (such as a mobile phone or a tablet computer) held by a driver or a supervisor may be used, and one or more of the function units shown in Fig. 4 may otherwise be constructed in such a communication terminal. All function units of this field travel route generation system may obviously be constructed in a work vehicle.

### [Industrial Applicability]

The present invention is applicable to a computer program and a computer system for searching for a guidance travel route to be set for a work vehicle travelling in a work field, and a work vehicle adopting such a route search technique. A work vehicle may travel along a travel route either manually or automatically.

### [Reference Signs List]

1: vehicle body
5: controlling unit
22: steering wheel
30: work device
50: travel control unit
51: manual travel control unit
52: automatic travel control unit
54: own position calculation unit
55: deviation calculation unit
57: travel route storing unit
58: notification unit
60: travel route search module
61: search area setting unit
62: positional relationship calculation unit
63: guidance route selection unit
80: satellite positioning module
CP: own vehicle reference point
EP: end point
LN: travel route
La: actual travel route portion
Lb: extended route portion

## Claims

1. A route search program for finding a guidance travel route to be targeted by a work vehicle travelling in a work field,
the route search program causing a computer to achieve:
a search area setting function of setting, as a search area (SA), a fan shaped area spreading in a travel direction from an own vehicle reference point (CP) which is a predetermined reference point of the work vehicle;
a positional relationship calculation function of calculating positional relationships among a plurality of travel route candidates, an own position of the work vehicle and the search area (SA), the plurality of travel route candidates being read from a travel route storing unit (57) storing a plurality of travel routes (LN) in the work field, the own position being calculated based on positioning data sent from a positioning module, wherein perpendicular lines passing through the own vehicle reference point (CP) toward the plurality of travel route candidates are obtained, each perpendicular line defining a shortest distance (MD) between the own vehicle reference point (CP) and a travel route (LN);
a guidance route selection function of selecting, as the guidance travel route to be targeted by the work vehicle, a travel route candidate determined as closest to the own vehicle reference point (CP) in the search area (SA), based on the positional relationships, from among the plurality of travel route candidates;
wherein, when it is determined that the own vehicle reference point (CP) lies on a travel route candidate, such a travel route candidate is selected as the guidance travel route;
wherein, when it is determined that the own vehicle reference point (CP) does not lie on a travel route candidate, it is determined whether an end point (EP) of an actual travel route portion of a travel route candidate is within a circle area of a search distance (R),
wherein if the end point (EP) of the actual travel route portion of the travel route candidate is within the circle area of the search distance (R), it is determined whether an angle between a straight line joining the end point (EP) and the own vehicle reference point (CP) and a travel direction of a vehicle body falls within a predetermined range,
wherein when the angle between the straight line joining the end point (EP) and the own vehicle reference point (CP) and the travel direction of the vehicle body falls within a predetermined range, a node (IP) between a side (Se) of the search area (SA) and a travel route candidate is calculated, and wherein when the node (IP) lies on an actual travel route portion of the travel route candidate, such a travel route candidate is selected as the guidance travel route; and
a deviation calculation function of calculating a deviation between the guidance travel route and the own position.

2. A route search system for finding a guidance travel route to be targeted by a work vehicle travelling in a work field, the route search system comprising:
a search area setting unit (61) that is configured to set, as a search area (SA), a fan shaped area spreading in a travel direction from an own vehicle reference point which is a predetermined reference point of the work vehicle;
a positional relationship calculation unit (62) that is configured to calculate positional relationships among a plurality of travel route candidates, an own position of the work vehicle and the search area (SA), the plurality of travel route candidates being read from a travel route storing unit (57) storing a plurality of travel routes (LN) in the work field, the own position being calculated based on positioning data sent from a positioning module, wherein perpendicular lines passing through the own vehicle reference point (CP) toward the plurality of travel route candidates are obtained, each perpendicular line defining a shortest distance (MD) between the own vehicle reference point (CP) and a travel route (LN);
a guidance route selection unit (63) that is configured to select, as the guidance travel route to be targeted by the work vehicle, a travel route candidate determined as closest to the own vehicle reference point (CP) in the search area (SA), based on the positional relationships, from among the plurality of travel route candidates;
wherein, when it is determined that the own vehicle reference point (CP) lies on a travel route candidate, such a travel route candidate is selected as the guidance travel route;
wherein, when it is determined that the own vehicle reference point (CP) does not lie on a travel route candidate, it is determined whether an end point (EP) of an actual travel route portion of a travel route candidate is within a circle area of a search distance (R),
wherein if the end point (EP) of the actual travel route portion of the travel route candidate is within the circle area of the search distance (R) it is determined whether an angle between a straight line joining the end point (EP) and the own vehicle reference point (CP) and a travel direction of a vehicle body falls within a predetermined range,
wherein when the angle between the straight line joining the end point (EP) and the own vehicle reference point (CP) and the travel direction of the vehicle body falls within a predetermined range, a node (IP) between a side (Se) of the search area (SA) and a travel route candidate is calculated, and wherein when the node (IP) lies on an actual travel route portion of the of the travel route candidate, such a travel route candidate is selected as the guidance travel route; and
a deviation calculation unit (55) that is configured to calculate a deviation between the guidance travel route and the own position.

3. A work vehicle configured to travel in a work field comprising:
a travel route storing unit (57) that is configured to store a plurality of travel routes (LN) in the work field;
an own position calculation unit (54) that is configured to calculate an own
position, based on positioning data sent from a positioning module;
and a route search system according to claim 2.

## Patentansprüche

1. Routensuchprogramm zum Ermitteln einer Führungsfahrtroute, die von einem Arbeitsfahrzeug, das in einem Arbeitsfeld fährt, angefahren werden soll,
wobei das Routensuchprogramm bewirkt, das ein Computer Folgendes erzielt:
eine Suchbereich-Einstellfunktion zum Einstellen, als einen Suchbereich (SA) eines fächerförmigen Bereichs, der sich in einer Fahrtrichtung von einem eigenen Fahrzeugreferenzpunkt (CP) ausbreitet, der ein vorbestimmter Referenzpunkt des Arbeitsfahrzeugs ist;
eine Positionsbeziehungs-Berechnungsfunktion zum Berechnen von Positionsbeziehungen aus einer Vielzahl von Fahrtroutenkandidaten, einer eigenen Position des Arbeitsfahrzeugs und dem Suchbereich (SA), wobei die Vielzahl von Fahrtroutenkandidaten aus einer Fahrtrouten-Speichereinheit (57) gelesen wird, die eine Vielzahl von Fahrtrouten (LN) in dem Arbeitsfeld speichert, die eigene Position anhand von Positionierungsdaten berechnet wird, die von einem Positionierungsmodul gesendet werden, wobei senkrechte Linien erhalten werden, die durch den eigenen Fahrzeugreferenzpunkt (CP) in Richtung der Vielzahl von Fahrtroutenkandidaten verlaufen, wobei jede senkrechte Linie eine kürzeste Entfernung (MD) zwischen dem eigenen Fahrzeugreferenzpunkt (CP) und einer Fahrtroute (LN) definiert;
eine Führungsrouten-Auswahlfunktion zum Auswählen, als die Führungsfahrtroute, die von einem Arbeitsfahrzeug angefahren werden soll, eines Fahrtroutenkandidaten, der aus der Vielzahl von Fahrtroutenkandidaten bestimmt wird, die dem eigenen Fahrzeugreferenzpunkt (CP) in dem Suchbereich (SA), anhand der Positionsbeziehungen, am nächsten liegt;
wobei, wenn bestimmt wird, dass der eigene Fahrzeugreferenzpunkt (CP) auf einem Fahrtroutenkandidaten liegt, ein solcher Fahrtroutenkandidat als Führungsfahrtroute ausgewählt wird;
wobei, wenn bestimmt wird, dass der eigene Fahrzeugreferenzpunkt (CP) nicht auf einem Fahrtroutenkandidaten liegt, bestimmt wird, ob ein Endpunkt (EP) eines tatsächlichen Fahrtroutenabschnitts eines Fahrtroutenkandidaten innerhalb eines Kreisbereichs einer Suchentfernung (R) liegt,
wobei, wenn der Endpunkt (EP) des tatsächlichen Fahrtroutenabschnitts des Fahrtroutenkandidaten innerhalb des Kreisbereichs der Suchentfernung (R) liegt, bestimmt wird, ob ein Winkel zwischen einer Geraden, die den Endpunkt (EP) und den eigenen Fahrzeugreferenzpunkt (CP) verbindet, und einer Fahrtrichtung einer Fahrzeugkarosserie innerhalb eines vorbestimmten Bereichs liegt, wobei, wenn der Winkel zwischen der Geraden, die den Endpunkt (EP) und den eigenen Fahrzeugreferenzpunkt (CP) verbindet, und der Fahrtrichtung der Fahrzeugkarosserie innerhalb eines vorbestimmten Bereichs liegt, ein Knoten (IP) zwischen einer Seite (Se) des Suchbereichs (SA) und einem Fahrtroutenkandidaten berechnet wird und wobei, wenn der Knoten (IP) auf einem tatsächlichen Fahrtroutenabschnitt des Fahrtroutenkandidaten liegt, wobei ein solcher Fahrtroutenkandidat als die Führungsfahrtroute ausgewählt wird; und
eine Abweichungs-Berechnungsfunktion zum Berechnen einer Abweichung zwischen der Führungsfahrtroute und der eigenen Position.

2. Routensuchsystem zum Ermitteln einer Führungsfahrtroute, die von einem Arbeitsfahrzeug, das in einem Arbeitsfeld fährt, angefahren werden soll, wobei das Routensuchsystem umfasst:
eine Suchbereich-Einstelleinheit (61), die derart konfiguriert ist, dass sie, als einen Suchbereich (SA), einen fächerförmigen Bereich einstellt, der sich in einer Fahrtrichtung von einem eigenen Fahrzeugreferenzpunkt ausbreitet, der ein vorbestimmter Referenzpunkt des Arbeitsfahrzeugs ist;
eine Positionsbeziehungs-Berechnungseinheit (62), die derart konfiguriert ist, dass Positionsbeziehungen aus einer Vielzahl von Fahrtroutenkandidaten, einer eigenen Position des Arbeitsfahrzeugs und dem Suchbereich (SA) berechnet, wobei die Vielzahl von Fahrtroutenkandidaten aus einer Fahrtrouten-Speichereinheit (57) gelesen wird, die eine Vielzahl von Fahrtrouten (LN) in dem Arbeitsfeld speichert, die eigene Position anhand von Positionierungsdaten berechnet wird, die von einem Positionierungsmodul gesendet werden, wobei senkrechte Linien erhalten werden, die durch den eigenen Fahrzeugreferenzpunkt (CP) in Richtung der Vielzahl von Fahrtroutenkandidaten verlaufen, wobei jede senkrechte Linie eine kürzeste Entfernung (MD) zwischen dem eigenen Fahrzeugreferenzpunkt (CP) und einer Fahrtroute (LN) definiert;
eine Führungsrouten-Auswahleinheit (63), die derart konfiguriert ist, dass sie, als Führungsfahrtroute, die von einem Arbeitsfahrzeug angefahren werden soll, einen Fahrtroutenkandidaten auswählt, der aus der Vielzahl von Fahrtroutenkandidaten bestimmt wird, die dem eigenen Fahrzeugreferenzpunkt (CP) in dem Suchbereich (SA), anhand der Positionsbeziehungen, am nächsten liegt;
wobei, wenn bestimmt wird, dass der eigene Fahrzeugreferenzpunkt (CP) auf einem Fahrtroutenkandidaten liegt, ein solcher Fahrtroutenkandidat als Führungsfahrtroute ausgewählt wird;
wobei, wenn bestimmt wird, dass der eigene Fahrzeugreferenzpunkt (CP) nicht auf einem Fahrtroutenkandidaten liegt, bestimmt wird, ob ein Endpunkt (EP) eines tatsächlichen Fahrtroutenabschnitts eines Fahrtroutenkandidaten innerhalb eines Kreisbereichs einer Suchentfernung (R) liegt,
wobei, wenn der Endpunkt (EP) des tatsächlichen Fahrtroutenabschnitts des Fahrtroutenkandidaten innerhalb des Kreisbereichs der Suchentfernung (R) liegt, bestimmt wird, ob ein Winkel zwischen einer Geraden, die den Endpunkt (EP) und den eigenen Fahrzeugreferenzpunkt (CP) verbindet, und einer Fahrtrichtung einer Fahrzeugkarosserie innerhalb eines vorbestimmten Bereichs liegt,
wobei, wenn der Winkel zwischen der Geraden, die den Endpunkt (EP) und den eigenen Fahrzeugreferenzpunkt (CP) verbindet, und der Fahrtrichtung der Fahrzeugkarosserie innerhalb eines vorbestimmten Bereichs liegt, ein Knoten (IP) zwischen einer Seite (Se) des Suchbereichs (SA) und einem Fahrtroutenkandidaten berechnet wird und wobei, wenn der Knoten (IP) auf einem tatsächlichen Fahrtroutenabschnitt des Fahrtroutenkandidaten liegt, ein solcher Fahrtroutenkandidat als die Führungsfahrtroute ausgewählt wird; und
eine Abweichungs-Berechnungseinheit (55), die derart konfiguriert ist, dass sie eine Abweichung zwischen der Führungsfahrtroute und der eigenen Position berechnet.

3. Arbeitsfahrzeug, das derart konfiguriert ist, dass es in einem Arbeitsfeld fährt, umfassend:
eine Fahrtrouten-Speichereinheit (57), die derart konfiguriert ist, dass sie eine Vielzahl von Fahrtrouten (LN) in dem Arbeitsfeld speichert;
eine eigene Positions-Berechnungseinheit (54), die derart konfiguriert ist, dass sie eine eigene Position anhand von Positionierungsdaten berechnet, die von einem Positionierungsmodul gesendet werden; und
ein Routensuchsystem nach Anspruch 2.

## Revendications

1. Programme de recherche d'itinéraire destiné à trouver un itinéraire de déplacement de guidage à cibler par un véhicule de travail se déplaçant dans un champ de travail,
le programme de recherche d'itinéraire amenant un ordinateur à réaliser :
une fonction de définition de zone de recherche de définition, en tant qu'une zone de recherche (SA), d'une zone en forme d'éventail s'étalant dans une direction de déplacement depuis un point de référence de véhicule propre (CP) qui est un point de référence prédéterminé du véhicule de travail ;
une fonction de calcul de relation de position de calcul de relations de position parmi une pluralité de candidats d'itinéraire de déplacement, d'une position propre du véhicule de travail et de la zone de recherche (SA), la pluralité de candidats d'itinéraire de déplacement étant lus depuis une unité de stockage d'itinéraires de déplacement (57) stockant une pluralité d'itinéraires de déplacement (LN) dans le champ de travail, la position propre étant calculée sur la base de données de positionnement envoyées depuis un module de positionnement, dans lequel des lignes perpendiculaires traversant le point de référence de véhicule propre (CP) vers la pluralité de candidats d'itinéraire de déplacement sont obtenues, chaque ligne perpendiculaire définissant une distance la plus courte (MD) entre le point de référence de véhicule propre (CP) et un itinéraire de déplacement (LN) ;
une fonction de sélection d'itinéraire de guidage de sélection, en tant que l'itinéraire de déplacement de guidage à cibler par le véhicule de travail, d'un candidat d'itinéraire de déplacement déterminé comme étant le plus proche du point de référence de véhicule propre (CP) dans la zone de recherche (SA) sur la base des relations de position parmi la pluralité de candidats d'itinéraire de déplacement ;
dans lequel, lorsqu'il est déterminé que le point de référence de véhicule propre (CP) se situe sur un candidat d'itinéraire de déplacement, un tel candidat d'itinéraire de déplacement est sélectionné en tant que l'itinéraire de déplacement de guidage ;
dans lequel, lorsqu'il est déterminé que le point de référence de véhicule propre (CP) ne se trouve pas sur un candidat d'itinéraire de déplacement, il est déterminé si un point d'extrémité (EP) d'une partie d'itinéraire de déplacement réel d'un candidat d'itinéraire de déplacement est situé ou non dans une zone circulaire d'une distance de recherche (R),
dans lequel si le point d'extrémité (EP) de la partie d'itinéraire de déplacement réel du candidat d'itinéraire de déplacement se trouve dans une zone circulaire de la distance de recherche (R), il est déterminé si un angle entre une ligne droite reliant le point d'extrémité (EP) et le point de référence de véhicule propre (CP) et une direction de déplacement d'une carrosserie de véhicule relève ou non d'une plage prédéterm inée,
dans lequel, lorsque l'angle entre la ligne droite reliant le point d'extrémité (EP) et le point de référence de véhicule propre (CP) et la direction de déplacement de la carrosserie de véhicule relève d'une plage prédéterminée, un noeud (IP) entre un côté (Se) de la zone de recherche (SA) et un candidat d'itinéraire de déplacement est calculé, et dans lequel, lorsque le noeud (IP) se situe sur une partie d'itinéraire de déplacement réel du candidat d'itinéraire de déplacement, un tel candidat d'itinéraire de déplacement est sélectionné en tant que l'itinéraire de déplacement de guidage ; et
une fonction de calcul d'écart de calcul d'un écart entre l'itinéraire de déplacement de guidage et la position propre.

2. Système de recherche d'itinéraire pour trouver un itinéraire de déplacement de guidage à cibler par un véhicule de travail se déplaçant dans un champ de travail, le système de recherche d'itinéraire comprenant :
une unité de définition de zone de recherche (61) qui est configurée pour définir, en tant qu'une zone de recherche (SA), une zone en forme d'éventail s'étalant dans une direction de déplacement depuis un point de référence de véhicule propre qui est un point de référence prédéterminé du véhicule de travail ;
une unité de calcul de relations de position (62), qui est configurée pour calculer des relations de position parmi une pluralité de candidats d'itinéraire de déplacement, une position propre du véhicule de travail et la zone de recherche (SA), la pluralité de candidats d'itinéraire de déplacement étant lue depuis une unité de stockage d'itinéraires de déplacement (57) stockant une pluralité d'itinéraires de déplacement (LN) dans le champ de travail, la position propre étant calculée sur la base de données de positionnement envoyées depuis un module de positionnement, dans lequel des lignes perpendiculaires traversant le point de référence de véhicule propre (CP) vers la pluralité de candidats d'itinéraire de déplacement sont obtenues, chaque ligne perpendiculaire définissant une distance la plus courte (MD) entre le point de référence de véhicule propre (CP) et un itinéraire de déplacement (LN) ;
une unité de sélection d'itinéraire de guidage (63) qui est configurée pour sélectionner, en tant que l'itinéraire de déplacement de guidage à cibler par le véhicule de travail, un candidat d'itinéraire de déplacement déterminé comme étant le plus proche du point de référence de véhicule propre (CP) dans la zone de recherche (SA) sur la base des relations de position parmi la pluralité de candidats d'itinéraire de déplacement ;
dans lequel, lorsqu'il est déterminé que le point de référence de véhicule propre (CP) se situe sur un candidat d'itinéraire de déplacement, un tel candidat d'itinéraire de déplacement est sélectionné en tant que l'itinéraire de déplacement de guidage ;
dans lequel, lorsqu'il est déterminé que le point de référence de véhicule propre (CP) ne se situe pas sur un candidat d'itinéraire de déplacement, il est déterminé si un point d'extrémité (EP) d'une partie d'itinéraire de déplacement réel d'un candidat d'itinéraire de déplacement se trouve dans une zone circulaire d'une distance de recherche (R),
dans lequel, si le point d'extrémité (EP) de la partie d'itinéraire de déplacement réel du candidat d'itinéraire de déplacement se trouve dans la zone circulaire de la distance de recherche (R), il est déterminé si un angle entre une ligne droite reliant le point d'extrémité (EP) et le point de référence de véhicule propre (CP) et une direction de déplacement d'une carrosserie de véhicule relève d'une plage prédéterminée,
dans lequel, lorsque l'angle entre la ligne droite reliant le point d'extrémité (EP) et le point de référence de véhicule propre (CP) et la direction de déplacement de la carrosserie de véhicule relève d'une plage prédéterminée, un noeud (IP) entre un côté (Se) de la zone de recherche (SA) et un candidat d'itinéraire de déplacement est calculé, et dans lequel, lorsque le noeud (IP) se situe sur une partie d'itinéraire de déplacement réel du candidat d'itinéraire de déplacement, un tel candidat d'itinéraire de déplacement est sélectionné en tant que l'itinéraire de déplacement de guidage ; et
une unité de calcul d'écart (55) qui est configurée pour calculer un écart entre l'itinéraire de déplacement de guidage et la position propre.

3. Véhicule de travail configuré pour se déplacer dans un champ de travail, comprenant :
une unité de stockage d'itinéraires de déplacement (57), qui est configurée pour stocker une pluralité d'itinéraires de déplacement (LN) dans le champ de travail ;
une unité de calcul de position propre (54) qui est configurée pour calculer une position propre, sur la base de données de positionnement envoyées depuis un module de positionnement ;
et un système de recherche d'itinéraire selon la revendication 2.
